# EUROPEAN PATENT APPLICATION

(11) **EP 1 282 026 A2**
(43) Date of publication of application: **05.02.2003**
(21) Application number: 02017202.9
(22) Date of filing: 31.07.2002
(51) Int. Cl.: G06F 1/00, H04L 9/30, G06K 7/00

(54) **Authentication method by means of a storing device**

(30) Priority: 03.08.2001 IT TO20010771
(71) Applicant: T.I.S.S. S.R.L., 10015 Ivrea (TO) (IT)
(72) Inventor: Roy, Thomas, 10015 Ivrea (TO) (IT)
(74) Representative: Robba, Pierpaolo

(57) **Abstract**

A user authentication method performed by a computer (FS) by means of a device (6) for storing data derived from a smart card (4) though cryptographic operations, in said smart card (4) being stored a digital certificate (CD_{CIE}), a private key (PrK_{CIE}) and the public key (PbK_{CIE}) corresponding to said private key (PrK_{CIE}); since said storing device (6) is univocally bound to said smart card (4), it can be used in an apparatus (10) able to communicate with said computer (FS) of a service provider, in order to authenticate the user of the storing device (6).

## Description

The object of the present invention is an authentication method by means of a storage device.

Electronic devices for storing information, like for instance magnetic and optical disks, microprocessors and so on, are in use since a lot of time.

Among said devices are also included cards for storing information. Said cards are used for different purposes: phone cards, credit cards or bank cards in general, cards for surveying the presence at the place of work and so on.

Said cards have been flanked by the so called smart cards that, besides storing information, also contain a unit (chip) able to process information.

In the case of the smart cards, new applications allowing a more active role of the cards are coming forward in order to exploit fully the capability of their processing devices.

On the card is stored information relative to the authorisations provided for the holder who will be able to obtain or not certain services at the end of an authentication procedure managed by service administration bodies (server).

The user authentication consists in guaranteeing to the service provider that the user is effectively that who is declaring to be. The authentication procedure is an essential element for providing remote services because the service provider does not have the possibility to verify personally the identity of whom is asking to obtain a certain service.

The use of the smart cards is diffusing rapidly also for services concerning the everyday's life, for instance the services provided by the public administration, and in the next future the use of a card and of a communication network will be indispensable for obtaining a big part of said services.

The use of the electronic identity card, that will replace in the next future the traditional paper identity card, is to be considered in this perspective. The electronic identity card will contain personal information both visibly printed on the card itself, like for instance the name, the surname, the place and the date of birth, and stored in digital form. Secret information will be also stored on the card as well, that is to say information accessible only to the electronic identity card's holder by means of a personal secret code or PIN (Personal Identification Number).

Since the electronic identity card must consent to identify its holder in a safe way, telematically as well, in order to allow the provision of diversified and always newer services as said services are conceived and made ready by the administrations, the card will be generally provided with a microprocessor allowing said functionalities, thereby guaranteeing, at a logical level, the identity of the card's holder in the telematic transactions during which the parties can not "see" each other.

Besides, the diffusion of said cards will make necessary to dispose of card readers at low cost and of simple use.

An electronic identity card reader will be provided for instance at the public administration bodies appointed for delivering the services.

Other readers will be installed at a certain number of peripheral offices, but, in any case, it is hardly imaginable that in the next future each user will be provided by the public administration with an electronic identity card reader that, in any case, must be connected at least with a computer and with a modem. Obviously, this fact constitutes a limit to the diffusion of the electronic identity card.

For making the use of the electronic identity card more advantageous, it would be desirable that the user could use the card by means of a tool more diffused than a special-purpose reader.

Besides, it would be desirable that the user could use the card also for purposes different from those connected with the public administration services, for instance for obtaining services delivered by service providers, like banks and shops of every kind, in order to give life to electronic commerce transactions.

In other words, the success of the electronic identity card, for the realisation of which the governments of various countries are investing considerable economic funds, will benefit from the fact that the user of the electronic identity card could use his/her electronic identity card or an equivalent of it, for instance for carrying out a banking operation without going to a bank or for buying a good without going to a shop.

Yet it is clear that it is necessary to find a means allowing to the citizen holding an electronic identity card, that, as far as Italy is concerned, will be distributed to each citizen by the end of 2004, to carry out operations with the service providers safely, easily, economically and without going in person to the service provider.

The present invention identifies the mobile phone, by this time largely diffused among all the layers of the population, as the means able to consent to the electronic identity card's holder to use the data therein contained for requesting certain services to a service provider by means of a normal phone call.

It is an object of the present invention to realise a user authentication method by means of a smart card, in particular by means of a smart card of the type used in the mobile phones.

This and other objects of the invention are obtained with the method as claimed in the hereby attached claims.

Advantageously, for being able to exploit the invention, the user holding an electronic identity card only needs a mobile phone, by this time largely diffused among the population, with its relative smart card.

For satisfying the criteria necessary to a safe information exchange, it is known to turn to cryptography, that is to the science dealing with the protection and the mathematical transformation of data into a non-readable format, thereby offering authentication, integrity, secrecy and nonrepudiation services.

The invention uses known cryptographic techniques, like the asymmetric cryptography with a public or a private key and the "hashing" algorithms, that is to say algorithms for obtaining a fixed-length string starting from a variable-length string.

Advantageously, the invention exploits information already present on the electronic identity card, in particular the public key, the private key and the digital certificate, that can be used for processing data cryptographically and for making safe the information exchange between the user and the service provider.

In addition, the digital certificate contains information about its owner, about the certification authority that issued the certificate and, in case, the list of the authorities disposing of the certificate revocation lists issued by the certification authority.

It is important to point out that the level of authentication obtainable by means of the method according to the invention is the same as the level guaranteed by the electronic identity card.

Besides, the present invention advantageously provides for the interruption in the service provision if anomalies during the card authentication procedure are discovered, for instance in case the cards result to be stolen, tampered with or expired, or in case someone tries to impersonate another individual.

Moreover, as far as the phone communication is concerned, the fact of being able to rely upon reliable and tested technologies like for instance the GSM technology is a further advantage for the user. In any case, the invention leaves out of consideration the communication protocol used with the service provider and therefore can be also used with possible improvements of the current communication standards, or with new communication standards.

The above mentioned and other objects of the invention will appear more clear from the detailed description of seven embodiments of the method according to the invention with particular reference to the hereby attached drawings, wherein:
- Figure 1 shows a device according to the invention for transferring data from an electronic identity card to a smart card of the type used in a mobile phone;
- Figures 2a,2b and 2c are respectively three schematic representations of communication systems applying the method according to the invention;
- Figures 3 and 4 are a flow chart of a first embodiment of the authentication method according to the invention;

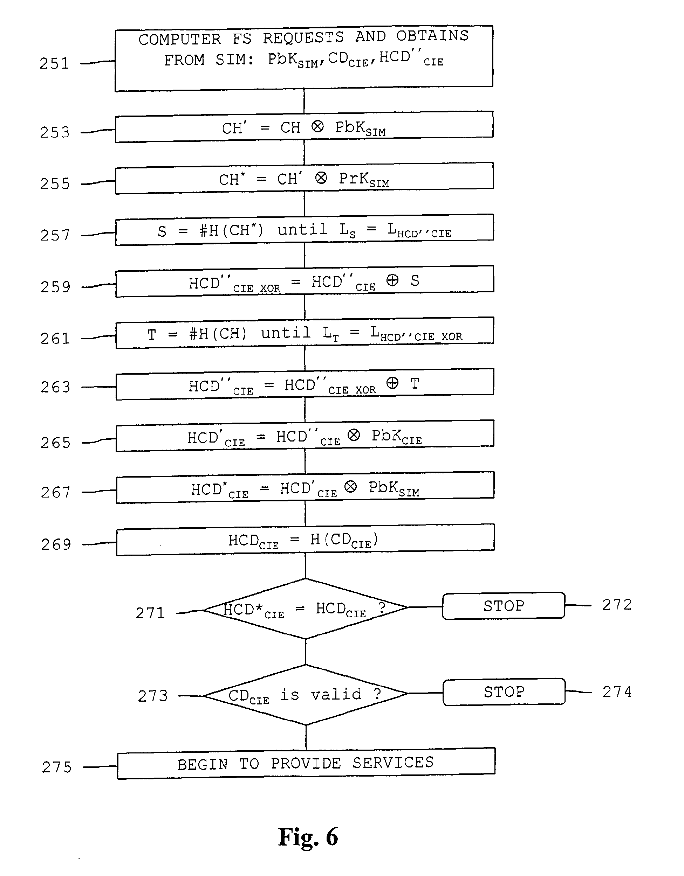

- Figures 5 and 6 are a flow chart of a second embodiment of the authentication method according to the invention;

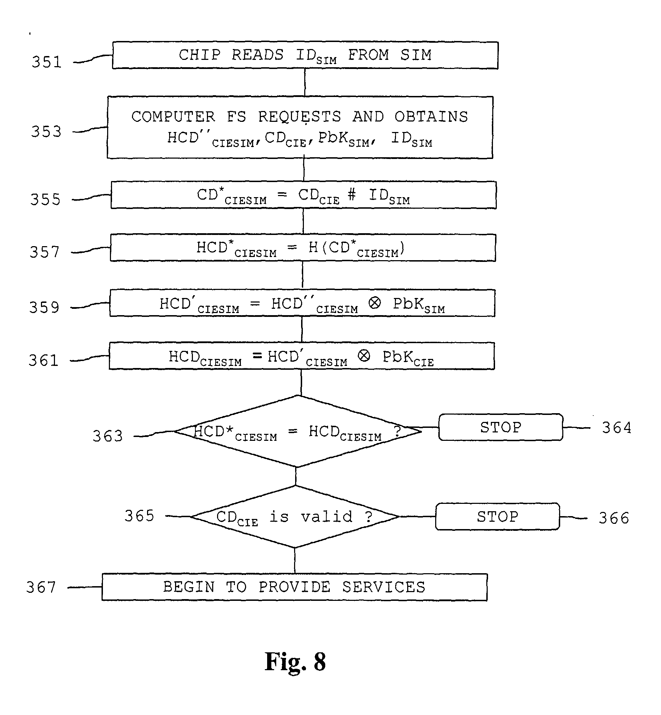

- Figures 7 and 8 are a flow chart of a third embodiment of the authentication method according to the invention;
- Figures 9 and 10 are a flow chart of a fourth embodiment of the authentication method according to the invention;
- Figures 11 and 12 are a flow chart of a fifth embodiment of the authentication method according to the invention;
- Figures 13 and 14 are a flow chart of a sixth embodiment of the authentication method according to the invention;
- Figures 15 and 16 are a flow chart of a seventh embodiment of the authentication method according to the invention.

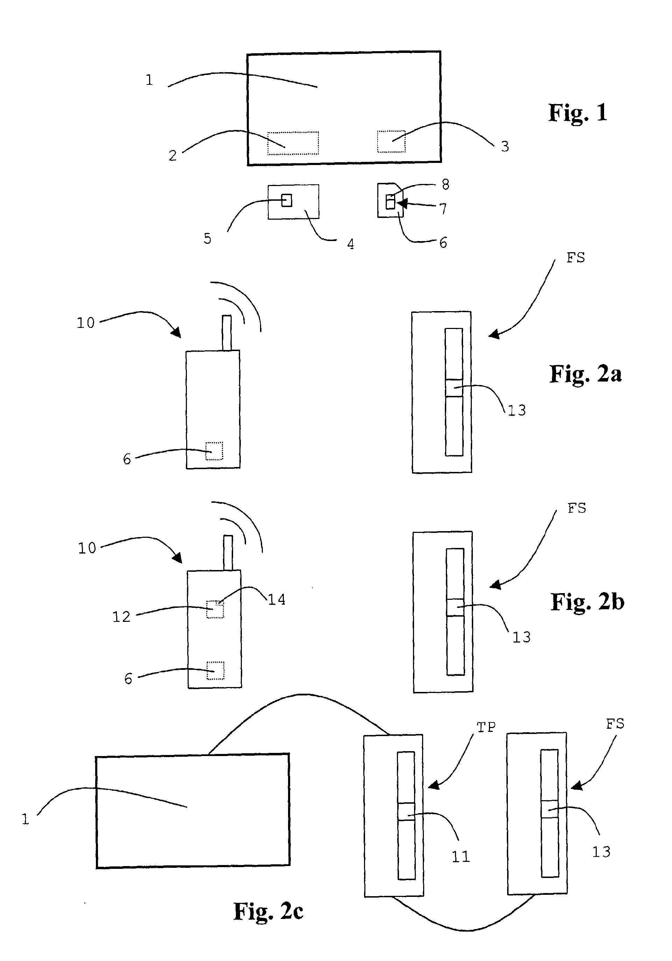

With reference to the Figure 1, it is shown a device 1 provided with two slots 2,3 respectively for inserting an electronic identity card 4 equipped with a microprocessor 5 and with a smart card 6 or SIM (Subscriber Identity Module) of the type used in the mobile phones, said SIM being provided with a memory area 8, wherein it is possible to store data, and being equipped with a microprocessor 7.

The data used by the method according to the invention are stored on the electronic identity card 4. In particular, it is about a digital certificate CD_{CIE}, a public key PbK_{CIE} and a private key PrK_{CIE}.

The digital certificate CD_{CIE}, currently arranged in format X.509, or public-key PbK_{CIE} digital certificate is a declaration issued by a certification authority CA which guarantees, thanks to the digital signature, the association between the public key PbK_{CIE} and the identity of the object (user, peripheral or service) owning the corresponding private key PrK_{CIE}.

The public key PbK_{CIE} and the private key PrK_{CIE} are mathematically correlated so that only the owner of the private key PrK_{CIE} is able to decode a digital information coded with the public key PbK_{CIE}.

It is important to point out that the private key PrK_{CIE} is invisible from outside but can be used for cryptographic operations.

In addition, the device 1 provides for some ports, not represented in the figure, for the possible connection to a computer, to a network, to Internet, or to a different electronic device.

Moreover, the device 1 will be able to perform, by means of a data processing unit and of an appropriate software, data reading operations from the electronic identity card 4, data reading and writing on the SIM 6, and data processing, therein comprising data cryptographic operations.

### Example 1

It is now described a first example of the method for authenticating the user of an electronic identity card 4 by means of a SIM 6 of the type suitable to be used in a mobile phone.

During the preparation stage of said SIM 6, the electronic identity card 4 and the SIM 6 are respectively inserted into the respective slots 2,3 of the device 1.

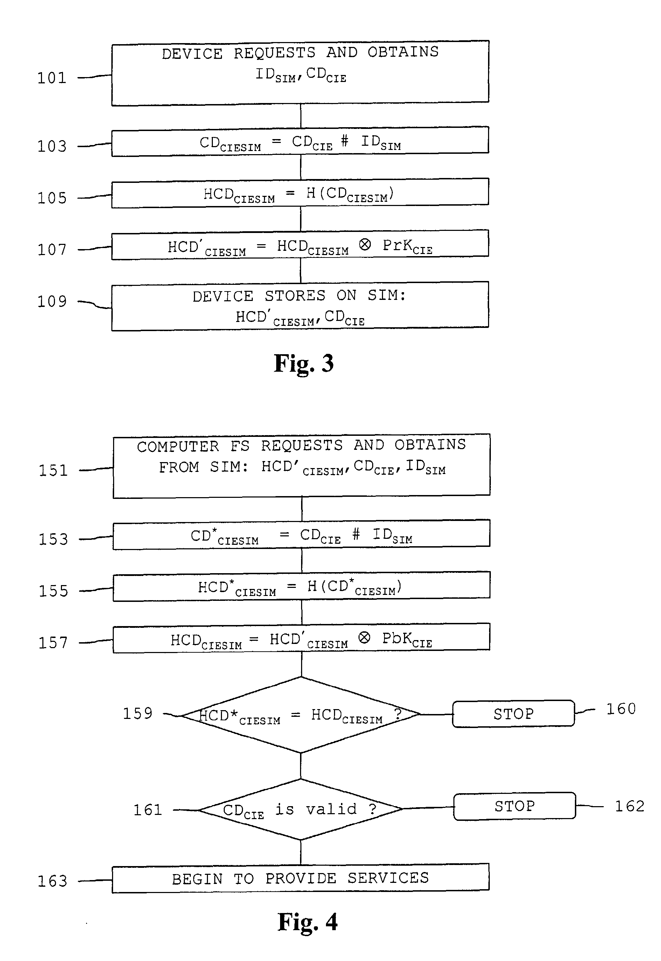

With reference to the Figure 3, at step 101 the device 1 requests and obtains from the SIM 6 a unique string ID_{SIM}, which is generally the serial number of the SIM, univocally assigned by the SIM manufacturer itself. Agreements reached between the different SIM manufacturers prevent that two SIMs having the same ID_{SIM} may exist. In this same step the device 1 requests and obtains the digital certificate CD_{CIE} from the electronic identity card 4.

At step 103 the device 1 concatenates the digital certificate CD_{CIE} with the unique string ID_{SIM}, thereby obtaining a string CD_{CIESIM} = CD_{CIE} # ID_{SIM}.

At step 105 the device 1 or the electronic identity card 4 performs a cryptographic operation by means of a "hashing" algorithm on the string CD_{CIESIM} obtained at step 103, thereby obtaining a string HCD_{CIESIM} = H(CD_{CIESIM}).

At step 107 the electronic identity card 4 uses the private key PrK_{CIE} for performing an asymmetric cryptographic operation on the string HCD_{CIESIM} obtained at the step 105, thereby obtaining a string HCD'_{CIESIM} = HCD_{CIESIM} ⊗ PrK_{CIE}.

At step 109 the string HCD'_{CIESIM} and the digital certificate CD_{CIE} containing the public key P_{b}K_{CIE} of the electronic identity card 4 are stored in the SIM 6. In this way the electronic identity card 4 is univocally bound to the SIM 6 of the mobile phone 10.

Then the SIM card 6 can be taken out from the device 1 and be inserted into a mobile phone 10 for being used in the authentication procedure with a service provider, for instance a bank, the public administration or a shop.

With reference to the Figures 2a and 4, it will be now described the authentication procedure according to this first embodiment of the invention.

By making a phone call to a service provider, the mobile phone 10 containing the SIM 6 is put into communication with a computer FS of a service provider.

During the stage of use of said SIM 6, at step 151 the computer FS of the service provider requests and obtains from the SIM 6, by means of the mobile phone 10, the string HCD'_{CIESIM}, the digital certificate CD_{CIE}, and the unique string ID_{SIM} of the SIM 6.

At step 153 the computer FS of the service provider concatenates the digital certificate CD_{CIE} with the string ID_{SIM}, thereby obtaining the string CD*_{CIESIM} = CD_{CIE} # ID_{SIM}.

At step 155 the computer FS performs a cryptographic operation by means of a "hashing" algorithm on the string CD*_{CIESIM} obtained at step 153, thereby obtaining a string HCD*_{CIESIM} = H(CD*_{CIESIM}).

At step 157 the computer FS of the service provider performs a cryptographic operation of the string HCD'_{CIESIM} with the public key PbK_{CIE}, present on the digital certificate CD_{CIE}, thereby obtaining the string HCD_{CIESIM} = HCD'_{CIESIM} ⊗ PbK_{CIE}.

At step 159 the computer FS compares the string HCD_{CIESIM} with the string HCD*_{CIESIM} (HCD_{CIESIM} = HCD*_{CIESIM} ?).

In case the string HCD_{CIESIM} does not match with the string HCD*_{CIESIM}, the computer FS of the service provider will stop the user authentication procedure (step 160).

At step 161, the computer FS interrogates a remote computer CRL disposing of the list of certificates revoked by the certification authority CA, said authority being identified through the digital certificate CD_{CIE} of the electronic identity card 4. Since the computer CRL guarantees the validity of the certificate, it verifies if the latter is valid (in case, the computer CRL may also coincide with the computer of the certification authority CA).

Only in case of positive outcome (step 163), the user authentication has turned out well and the service provider will begin offering services to the user, since the service provider has unequivocally identified the owner of the SIM 6 contained in the mobile phone 10. Otherwise (step 162) the service provider will stop the user authentication procedure.

### Example 2

It will be now described a second embodiment of the invention wherein the unique string ID_{SIM} of the SIM 6 is not used.

During the preparation stage of said SIM 6, the electronic identity card 4 and the SIM 6 are respectively inserted into the respective slots 2,3 of the device 1.

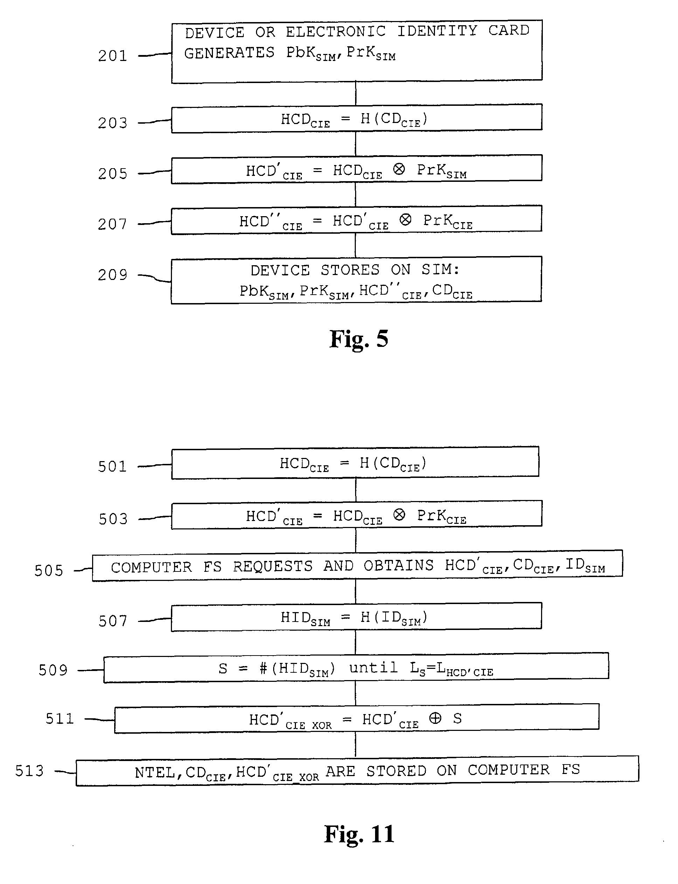

With reference to the Figure 5, at step 201 the device 1 or, as an alternative, the electronic identity card 4 itself, generate a public key PbK_{SIM} and a corresponding private key PrK_{SIM}.

At step 203 the device 1, or the electronic identity card 4, performs a cryptographic operation by means of a "hashing" algorithm of the digital certificate CD_{CIE} read by the electronic identity card 4, thereby obtaining the string HCD_{CIE} = H(CD_{CIE}).

At step 205 the device 1, or the electronic identity card 4, performs an asymmetric cryptographic operation of the string HCD_{CIE} with the private key PrK_{SIM}, thereby obtaining the string HCD'_{CIE} = HCD_{CIE} ⊗ PrK_{SIM.}

At step 207 the electronic identity card 4 performs an asymmetric cryptographic operation of the string HCD'_{CIE} with the private key PrK_{CIE} of the electronic identity card 4, thereby obtaining the string HCD"_{CIE} = HCD'_{CIE} ⊗ PrK_{CIE}.

Finally, the private key PrK_{SIM}, the public key PbK_{SIM}, the digital certificate CD_{CIE} of the electronic identity card 4 and the string HCD"_{CIE} are stored in the SIM 6 (step 209). In this way, the electronic identity card 4 is univocally bound to the SIM 6 of a mobile phone 10.

Naturally, the private key PrK_{SIM} will be stored in the SIM 6, according to known techniques, thereby guaranteeing the inaccessibility from outside, apart from the microprocessor of the mobile phone 10.

Then the SIM card 6 can be taken out from the device 1 and be inserted into a mobile phone 10 for being used in the authentication procedure with a service provider, for instance a bank, the public administration or a shop.

With reference to the Figures 2b e 6, it will be now described the authentication procedure, according to said second embodiment of the invention.

By making a phone call to a service provider, the mobile phone 10 equipped with a microprocessor or chip 12 and containing the SIM 6 is put into communication with a computer FS of a service provider.

During the stage of use of said SIM 6, at step 251 the computer FS of the service provider requests and obtains from the SIM 6 of the mobile phone 10 the public key PbK_{SIM}, the string HCD"_{CIE} and the digital certificate CD_{CIE}.

At step 253 the computer FS generates a random number CH, creates from said number CH, by means of an asymmetric cryptographic operation with the public key PbK_{SIM}, a string CH' = CH ⊗ PbK_{SIM}, and sends said string CH' to the SIM 6 of the mobile phone 10.

At step 255 either the SIM 6 or the mobile phone 10 deciphers the string CH' with the private key PrK_{SIM}, thereby obtaining the number CH* = CH' ⊗ PrK_{SIM}.

At step 257 the SIM 6, or the mobile phone 10, by means of an "hashing" algorithm on the random number CH*, generates a string S. Said string S is concatenated with itself more times until its length L_{S} is equal to the length L_{HCD"CIE} of the string HCD"_{CIE} (S = #H(CH*) until L_{S} = L_{HCD"CIE}).

At step 259, either the SIM 6 or the mobile phone 10 generate a string HCD"_{CIE_XOR} obtained by performing the logic operation XOR between the string HCD"_{CIE} and the string S. The string HCD"_{CIE_XOR} = HCD"_{CIE} ⊕ S is successively sent to the computer FS.

At step 261, the computer FS, by means of a "hashing" algorithm on the random number CH, generates a string T. Said string T is concatenated with itself more times until its length L_{T} is equal to the length L_{HCD"CIE_XOR} of the string HCD"_{CIE_XOR} (T = #H(CH) until L_{T} = L_{HCD"CIE_XOR}).

At step 263, the computer FS obtains the string HCD"_{CIE} = HCD"_{CIE_XOR} ⊕ T by performing the logic operation XOR between the string HCD"_{CIE_XOR} and the string T.

At step 265, the computer FS deciphers the string HCD"_{CIE} with the public key PbK_{CIE}, present on the digital certificate CD_{CIE}, thereby obtaining the string HCD'_{CIE} = HCD"_{CIE} ⊗ PbK_{CIE}.

At step 267, the computer FS deciphers the string HCD'_{CIE} with the public key PbK_{SIM}, thereby obtaining the string HCD*_{CIE} = HCD'_{CIE} ⊗ PbK_{SIM}.

At step 269, the computer FS by means of a "hashing" algorithm on the digital certificate CD_{CIE}, obtains the string HCD_{CIE} = H(CD_{CIE}).

At step 271, the computer FS compares the string HCD*_{CIE} with the string HCD_{CIE} (HCD*_{CIE} = HCD_{CIE} ?). In case the string HCD*_{CIE} does not match with the string HCD_{CIE}, the service provider will stop the user authentication procedure (step 272).

At step 273, the computer FS interrogates a remote computer CRL disposing of the list of certificates revoked by the certification authority CA, said authority being identified through the digital certificate CD_{CIE} of the electronic identity card 4 (in case, the computer CRL can also coincide with the computer of the certification authority CA). Since the computer CRL guarantees the validity of the certificate, it verifies if the latter is valid.

Only in case of positive outcome (step 275), the user authentication has turned out well and the service provider will begin offering services to the user, since the service provider has unequivocally identified the owner of the SIM 6 contained in the mobile phone 10. Otherwise (step 274) the service provider will stop the user authentication procedure.

### Example 3

A further embodiment of the method according to the invention provides for the use of a chip 12 present in a mobile phone 10 for performing the biggest part of the cryptographic operations required by the method according to the invention.

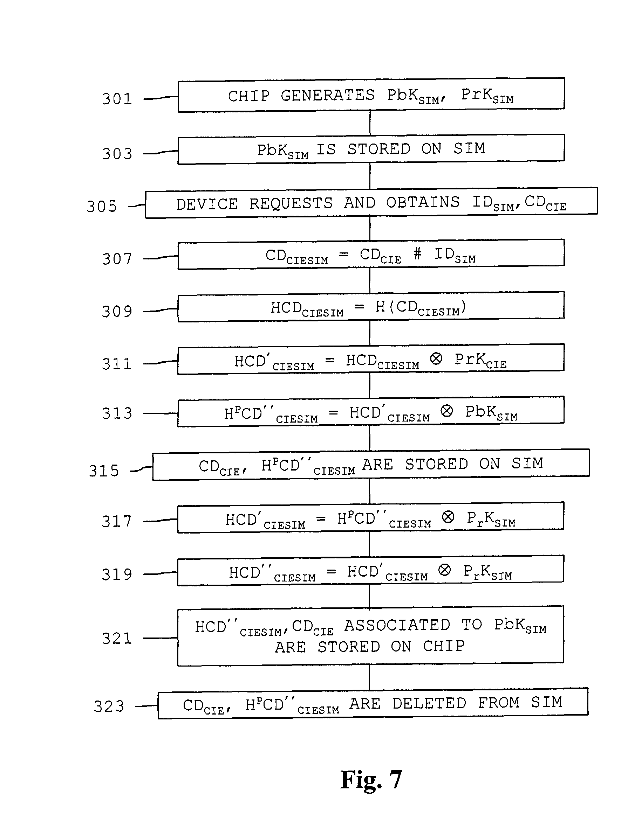

With reference to the Figure 7, during the stage of preparation of said SIM 6, at step 301 the chip 12 provided in the mobile phone 10 generates a pair of private and public keys PrK_{SIM} e PbK_{SIM} that is stored in a memory area 14 of said chip 12.

At the successive step 303 the public key PbK_{SIM} is written on the SIM 6 that is inserted into the mobile phone 10.

The SIM card 6 is then taken out from the mobile phone 10 and inserted into the device 1 wherein also the electronic identity card 4 will be inserted.

At step 305 the device 1 requests and obtains from the SIM 6 a unique string ID_{SIM}, that generally is the serial number of the SIM 6. In this same step the device 1 requests and obtains the digital certificate CD_{CIE} from the electronic identity card 4.

At step 307 the device 1 concatenates the digital certificate CD_{CIE} with the string ID_{SIM}, thereby obtaining a string CD_{CIESIM} = CD_{CIE} # ID_{SIM}.

At step 309 the device 1, or the electronic identity card 4, obtains the string HCD_{CIESIM} = H(CD_{CIESIM}) by means of a "hashing" algorithm on the string CD_{CIESIM}.

At step 311 the electronic identity card 4 uses the private key PrK_{CIE} for performing a cryptographic operation on the string HCD_{CIESIM}, thereby obtaining a string HCD'_{CIESIM} = HCD_{CIESIM} ⊗ PrK_{CIE}.

At step 313 the device 1 uses the public key PbK_{SIM} generated at step 301 for performing an asymmetric cryptographic operation on the string HCD'_{CIESIM}, thereby obtaining the string H^{P}CD"_{CIESIM} = HCD'_{CIESIM} ⊗ PbK_{SIM}.

At step 315 the device 1 writes on the SIM 6 the string H^{P}CD"_{CIESIM} and the digital certificate CD_{CIE} that is located on the electronic identity card 4.

Successively, the SIM 6 can be inserted again into the mobile phone 10.

At step 317 the chip 12 performs an asymmetric cryptographic operation on the string H^{P}CD"_{CIESIM} with the private key PrK_{SIM}, thereby obtaining the string HCD'_{CIESIM} = H^{P}CD"_{CIESIM} ⊗ PᵣK_{SIM}.

Successively, at step 319, the chip 12 performs an asymmetric cryptographic operation on the string HCD'_{CIESIM} with the private key PrK_{SIM}, thereby obtaining the string HCD"_{CIESIM} = HCD'_{CIESIM} ⊗ PᵣK_{SIM}.

At step 321 the chip 12 writes in its memory 14 the string HCD"_{CIESIM} and the digital certificate CD_{CIE} associating them to the public key PbK_{SIM} generated at step 301.

At step 323 the chip 12 provides for deleting from the SIM 6 the string H^{P}CD"_{CIESIM} and the digital certificate CD_{CIE}.

The SIM card 6 and the mobile phone 10 can be used in the authentication procedure with a service provider, for instance a bank, the public administration or a shop.

With reference to the Figures 2a e 8, it will now be described the authentication procedure according to this third embodiment of the invention.

By making a phone call to a service provider, the mobile phone 10 containing the SIM 6 is put into communication with a computer FS of a service provider.

During the stage of use of said SIM 6, at step 351 the chip 12 of the mobile phone 10 reads the string ID_{SIM} from the SIM 6.

At step 353 the computer FS of the service provider requests and obtains the string HCD"_{CIESIM}, the digital certificate CD_{CIE,} the public key PbK_{SIM} and the string ID_{SIM} from the chip 12 of the mobile phone 10.

At stage 355 the computer FS of the service provider concatenates the digital certificate CD_{CIE} with the string ID_{SIM}, thereby obtaining the string CD'_{CIESIM} = CD_{CIE} # ID_{SIM}.

At step 357 the computer FS performs a cryptographic operation by means of an "hashing" algorithm on the string CD*_{CIESIM}, thereby obtaining the string HCD*_{CIESIM} = H(CD*_{CIESIM}).

At step 359 the computer FS of the service provider performs an asymmetric cryptographic operation of the string HCD"_{CIESIM} with the public PbK_{SIM}, thereby obtaining the string HCD'_{CIESIM} = HCD"_{CIESIM} ⊗ PbK_{SIM}.

At step 361 the computer FS of the service provider performs an asymmetric cryptographic operation of the string HCD'_{CIESIM} with the public key PbK_{CIE}, present on the certificate CD_{CIE}, thereby obtaining the string HCD_{CIESIM} = HCD'_{CIESIM} ⊗ PbK_{CIE}.

At step 363 the computer FS compares the string HCD_{CIESIM} with the string HCD*_{CIESIM} (HCD_{CIESIM} = HCD*_{CIESIM} ?).

In case the string HCD_{CIESIM} does not match with the string HCD*_{CIESIM}, the computer FS of the service provider will stop the user authentication procedure (step 364).

At step 365, the computer FS interrogates a remote computer CRL disposing of the list of certificates revoked by the certification authority CA, said authority being identified through the digital certificate CD_{CIE} of the electronic identity card 4 (in case, the computer CRL can also coincide with the computer of the certification authority CA). Since the computer CRL guarantees the validity of the certificate, it verifies if the latter is valid.

Only in case of positive outcome (step 367), the user authentication has turned out well and the service provider will begin offering services to the user, since the service provider has unequivocally identified the owner of the SIM 6 contained in the mobile phone 10. Otherwise (step 366) the service provider will stop the user authentication procedure.

### Example 4

A fourth embodiment according to the invention provides for a second computer that can be consulted for instance through Internet and is managed by a third party different from the user and from the service provider.

With reference to the Figure 2c, a computer TP of a third party is equipped with a memory 11 and, on the one side, can be connected to the device 1 and, on the other side, can communicate with a computer FS of a service provider.

During the preparation stage of said SIM 6, the electronic identity card 4 and the SIM 6 are respectively inserted into the respective slots 2,3 of the device 1.

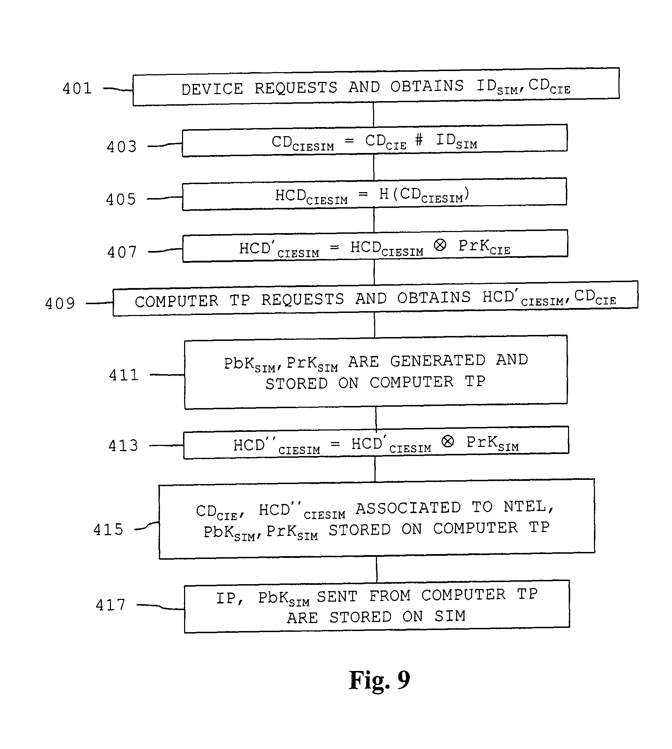

With reference to Figure 9, at step 401 the device 1 requests and obtains from the SIM 6 a unique string ID_{SIM}, that is generally the serial number of the SIM 6. In this same step, the device 1 requests and obtains from the electronic identity card 4 the digital certificate CD_{CIE.}

At step 403 the device 1 concatenates the digital certificate CD_{CIE} with the string ID_{SIM}, thereby obtaining a string CD_{CIESIM} = CD_{CIE} # ID_{SIM}.

At step 405 the device 1, or the electronic identity card 4, performs a cryptographic operation by means of a "hashing" algorithm on the string CD_{CIESIM}, thereby obtaining the string HCD_{CIESIM} = H(CD_{CIESIM}).

At step 407 the electronic identity card 4 uses the private key PrK_{CIE} for performing an asymmetric cryptographic operation on the string HCD_{CIESIM}, thereby obtaining the string HCD'_{CIESIM} = HCD_{CIESIM} ⊗ PrK_{CIE}.

The device 1 transfers the string HCD'_{CIESIM} and the digital certificate CD_{CIE} to the computer TP (step 409).

At step 411 the computer TP or the electronic identity card 4 or the device 1 generates a public key PbK_{SIM} and a corresponding private key PrK_{SIM} that are in any case stored in the memory 11 of the computer TP.

At step 413 the computer TP uses the private key PrK_{SIM} for performing an asymmetric cryptographic operation of the string HCD'_{CIESIM}, thereby obtaining the string HCD"_{CIESIM} = HCD'_{CIESIM} ⊗ PrK_{SIM}.

At step 415 the computer TP stores the digital certificate CD_{CIE} and the string HCD"_{CIESIM}, besides associating biunivocally the user phone number NTEL with said data and with the public key PbK_{SIM} and the private key PrK_{SIM}.

At step 417 the computer TP sends its IP address and the public key PbK_{SIM} to the device 1 that stores them on the SIM 6. In this way, the electronic identity card 4 is bound univocally to the SIM 6 of a mobile phone 10 through the computer TP.

Then the SIM card 6 can be taken out from the device 1 and be inserted into the mobile phone 10 in order to be used in the authentication procedure with a service provider, for instance a bank, the public administration or a shop.

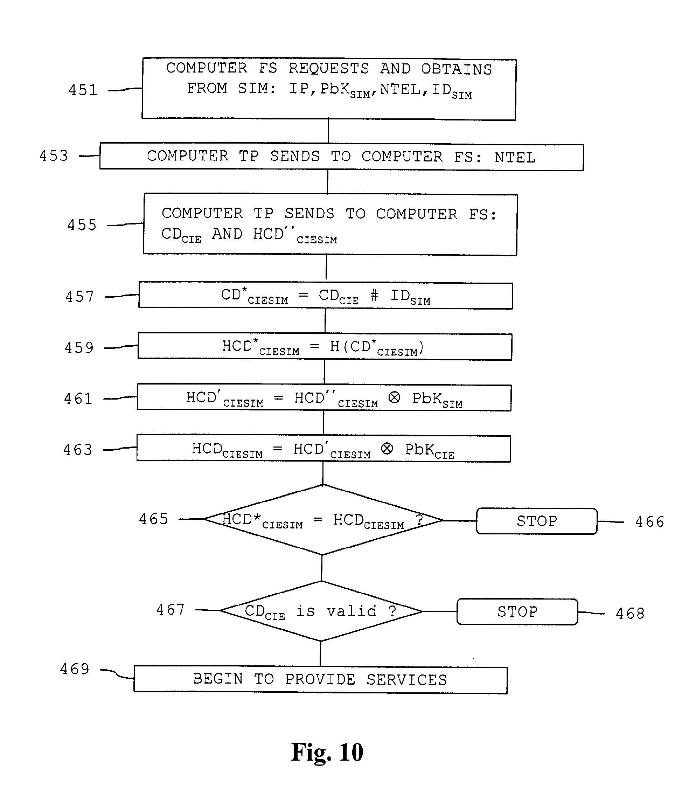

With the reference to the Figures 2a and 10 it will be now described the authentication procedure according to this fourth embodiment of the invention.

By making a phone call to a service provider, a mobile phone 10 containing the SIM 6 is put into communication with a computer FS of a service provider.

During the stage of use of said SIM 6, at step 451 the computer FS of the service provider requests and obtains from the SIM 6 of the mobile phone 10 the IP address of the computer TP, the public key PbK_{SIM}, the user phone number NTEL and the unique string ID_{SIM}.

At step 453 the computer FS communicates via Internet with the computer TP, thanks to the IP address, and sends to it the user phone number NTEL.

At step 455 the computer TP, thanks to the phone number, sends to the computer FS the digital certificate CD_{CIE} and the string HCD"_{CIESIM} corresponding to the user phone number NTEL.

At step 457 the computer FS of the service provider concatenates the string CD_{CIE} with the string ID_{SIM}, thereby obtaining the string CD*_{CIESIM} = CD_{CIE} # ID_{SIM}.

At step 459 the computer FS performs a cryptographic operation by means of an "hashing" algorithm on the string CD*_{CIESIM}, thereby obtaining the string HCD*_{CIESIM} = H(CD*_{CIESIM}).

At step 461 the computer FS of the service provider deciphers the string HCD"_{CIESIM} with the public key PbK_{SIM}, thereby obtaining the string HCD'_{CIESIM} = HCD"_{CIESIM} ⊗ PbK_{SIM}.

At step 463 the computer FS of the service provider deciphers the string HCD'_{CIESIM} with the public key PbK_{CIE}, present on the digital certificate CD_{CIE}, thereby obtaining the string HCD_{CIESIM} = HCD'_{CIESIM} ⊗ PbK_{CIE}.

At step 465 the computer FS compares the string HCD_{CIESIM} with the string HCD*_{CIESIM} (HCD_{CIESIM} = HCD*_{CIESIM} ?).

In case the string HCD_{CIESIM} does not match with the string HCD*_{CIESIM}, the computer FS of the service provider will stop the user authentication procedure (step 466).

At step 467, the computer FS interrogates a remote computer CRL disposing of the list of certificates revoked by the certification authority CA, said authority being identified through the digital certificate CD_{CIE} of the electronic identity card 4 (in case, the computer CRL can also coincide with the computer of the certification authority CA). Since the computer CRL guarantees the validity of the certificate, it verifies if the latter is valid.

Only in case of positive outcome (step 469), the user authentication has turned out well and the service provider will begin offering services to the user, since the service provider has unequivocally identified the owner of the SIM 6 contained in the mobile phone 10. Otherwise (step 468) the service provider will stop the user authentication procedure.

### Example 5

A fifth embodiment of the method according to the invention concerns the possibility for the user to go directly to a service provider with a mobile phone and an electronic identity card.

During the preparation stage of said SIM 6, the electronic identity card 4 and the SIM 6 are respectively inserted into the respective slots 2,3 of the device 1.

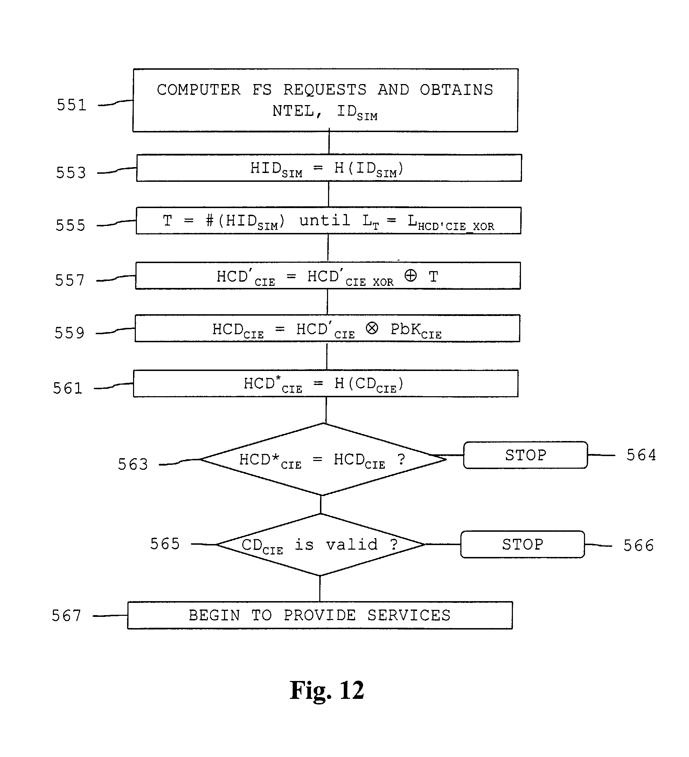

With reference to the Figure 11, at step 501 the device 1, or the electronic identity card 4, performs a cryptographic operation by means of a "hashing" algorithm on the digital certificate CD_{CIE} read by the electronic identity card 4, thereby obtaining a string HCD_{CIE} = H(CD_{CIE}).

At step 503 the electronic identity card 4 performs an asymmetric cryptographic operation on the string HCD_{CIE} with the private key PrK_{CIE} present on the electronic identity card 4, thereby obtaining the string HCD'_{CIE} = HCD_{CIE} ⊗ PrK_{CIE}.

At step 505 the device 1 transfers the string HCD'_{CIE}, the digital certificate CD_{CIE} and the unique string ID_{SIM}, that is generally the serial number of the SIM 6, to the computer FS of the service provider that is equipped with a memory (13).

At step 507 the computer FS generates, by means of a "hashing" algorithm on the string ID_{SIM}, a string HID_{SIM} = H(ID_{SIM}) that is concatenated with itself (step 509) until the length L_{S} of the string S so generated is not equal to the length L_{HCD'CIE} of the string HCD'_{CIE} (S = #(HID_{SIM}) until L_{S}=L_{HCD'CIE}).

At step 511 a logic operation XOR between the string HCD'_{CIE} and the string S is performed, thereby obtaining a string HCD'_{CIE_XOR} = HCD'_{CIE} ⊕ S.

At step 513 the user phone number NTEL, the string HCD'_{CIE_XOR} and the digital certificate CD_{CIE} are stored on the computer FS.

Then the SIM card 6 can be taken out from the device 1 and be inserted into a mobile phone 10 for being used in the authentication procedure with the service provider where the operations described at the steps 501-513 have been performed.

With reference to the Figures 2a and 12, it will be now described the authentication procedure according to said fifth embodiment of the invention.

By making a phone call to a service provider, the mobile phone 10 containing the SIM 6 is put into communication with a computer FS of a service provider.

During the use stage of said second smart card 6, at step 551 the computer FS requests and obtains from the SIM 6 the phone number NTEL and the unique string ID_{SIM}.

At step 553 the computer FS performs a cryptographic operation by means of a "hashing" algorithm of the string ID_{SIM}, thereby obtaining the string HID_{SIM} = H(ID_{SIM}).

At step 555 the computer FS generates a string T that is concatenated with itself more times until it has a length L_{T} equal to the length L_{HCD'CIE_XOR} of the string HCD'_{CIE_XOR} associated to the corresponding phone number NTEL (T = #(HID_{SIM}) until L_{T} = L_{HCD'CIE_XOR}).

At step 557 a logic operation XOR is performed between the string HCD'_{CIE_XOR} and the string T obtained at step 555, thereby obtaining the string HCD'_{CIE} = HCD'_{CIE_XOR} ⊕ T.

At step 559 an asymmetric cryptographic operation of the string HCD'_{CIE} with the public key PbK_{CIE} is performed, thereby obtaining the string HCD_{CIE} = HCD'_{CIE} ⊗ PbK_{CIE}.

At step 561 the computer FS obtains by means of a "hashing" algorithm on the digital certificate CD_{CIE} the string HCD*_{CIE} = H(CD_{CIE}).

At step 563 the computer FS compares the string HCD_{CIE} with the string HCD*_{CIE} (HCD_{CIE} = HCD*_{CIE} ?).

In case the string HCD_{CIE} does not match with the string HCD*_{CIE}, the computer FS of the service provider will stop the user authentication procedure (step 564).

At step 565, the computer FS interrogates a remote computer CRL disposing of the list of certificates revoked by the certification authority CA, said authority being identified through the digital certificate CD_{CIE} of the electronic identity card 4 (in case, the computer CRL can also coincide with the computer of the certification authority CA). Since the computer CRL guarantees the validity of the certificate, it verifies if the latter is valid.

Only in case of positive outcome (step 567), the user authentication has turned out well and the service provider will begin offering services to the user, since the service provider has unequivocally identified the owner of the SIM 6 contained in the mobile phone 10. Otherwise (step 566) the service provider will stop the user authentication procedure.

### Example 6

It will be now described a sixth method for authenticating the user of an electronic identity card 4 by means of a SIM 6 of the type suitable to be used in a mobile phone in which an "hashing" algorithm is not used.

In fact, as it is known, the advantage of storing strings, to which an "hashing" algorithm has been applied, consists in the fact that the length of said strings, typically of 16 or 20 bytes, is at least of two orders of magnitude lower than the length of a digital certificate that is typically of 4 kilobytes.

This fact is extremely important especially for the authentication methods in which the strings are stored in the SIM 6 and in the chip 12, that do not dispose of a so high memory capacity as the memories of the computers FS or TP.

With reference to this sixth example, during the preparation stage of said SIM 6, the electronic identity card 4 and the SIM 6 are respectively inserted into the slots 2,3 of the device 1.

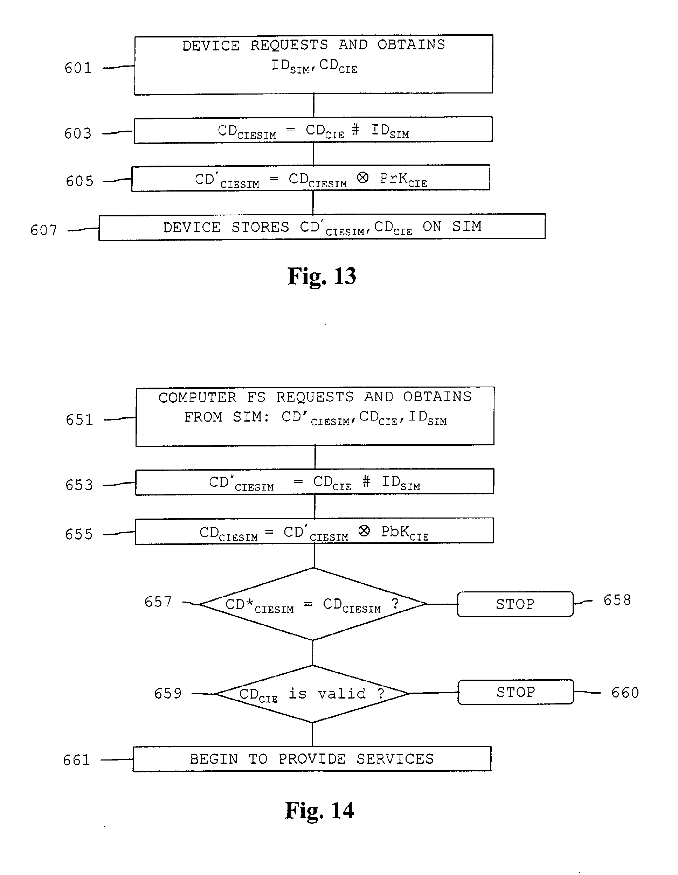

With reference to the Figure 13, at step 601 the device 1 requests and obtains from the SIM 6 a unique string ID_{SIM}, that is generally the serial number of the SIM. In this same step, the device 1 requests and obtains from the electronic identity card 4 the digital certificate CD_{CIE}.

At step 603 the device 1 concatenates the digital certificate CD_{CIE} with the unique string ID_{SIM}, thereby obtaining a string CD_{CIESIM} = CD_{CIE} # ID_{SIM}.

At step 605 the electronic identity card 4 uses the private key PrK_{CIE} for performing an asymmetric cryptographic operation on the string CD_{CIESIM} obtained at step 603, thereby obtaining a string CD'_{CIESIM} = CD_{CIESIM} ⊗ PrK_{CIE}.

At step 607 the string CD'_{CIESIM} and the digital certificate CD_{CIE} containing the public key P_{b}K_{CIE} of the electronic identity card 4 are stored on the SIM 6. In this way, the electronic identity card 4 is bound univocally to the SIM 6 of a mobile phone 10.

Then the SIM card 6 can be taken out from the device 1 and be inserted into the mobile phone 10 for being used in the authentication procedure with a service provider, for instance a bank, the public administration or a shop.

With reference to the Figures 2a and 14 it will be now described the authentication procedure according to this sixth embodiment of the invention.

By making a phone call to a service provider, a mobile phone 10 containing the SIM 6 is put into communication with a computer FS of a service provider.

During the use stage of said second smart card 6, at step 651 the computer FS of the service provider requests and obtains from the SIM 6, via the mobile phone 10, the string CD'_{CIESIM}, the digital certificate CD_{CIE}, and the unique string ID_{SIM} of the SIM 6.

At step 653 the computer FS of the service provider concatenates the digital certificate CD_{CIE} with the string ID_{SIM}, thereby obtaining the string CD*_{CIESIM} = CD_{CIE} # ID_{SIM}.

At step 655 the computer FS of the service provider will perform an asymmetric cryptographic operation of the string CD'_{CIESIM} with the public key PbK_{CIE}, present on the digital certificate CD_{CIE}, thereby obtaining the string CD_{CIESIM} = CD'_{CIESIM} ⊗ PbK_{CIE}.

At step 657 the computer FS compares the string CD_{CIESIM} with the string CD*_{CIESIM} (CD_{CIESIM} = CD*_{CIESIM} ?).

In case the string CD_{CIESIM} does not match with the string CD*_{CIESIM}, the computer FS of the service provider will stop the user authentication procedure (step 658).

At step 659, the computer FS interrogates a remote computer CRL disposing of the list of certificates revoked by the certification authority CA, said authority being identified through the digital certificate CD_{CIE} of the electronic identity card 4 (in case, the computer CRL can also coincide with the computer of the certification authority CA). Since the computer CRL guarantees the validity of the certificate, it verifies if the latter is valid.

Only in case of positive outcome (step 661), the user authentication has turned out well and the service provider will begin offering services to the user, since the service provider has unequivocally identified the owner of the SIM 6 contained in the mobile phone 10. Otherwise (step 660) the service provider will stop the user authentication procedure.

### Example 7

It will be now described a seventh embodiment of the invention wherein the unique string ID_{SIM} of the SIM 6 is used.

During the preparation stage of said SIM 6, the electronic identity card 4 and the SIM 6 are respectively inserted into the respective slots 2,3 of the device 1.

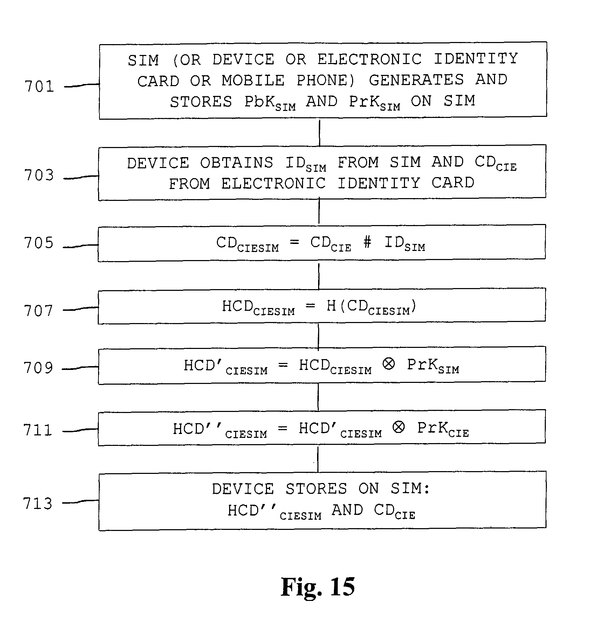

With reference to the Figure 15, at step 701 the SIM 6 or, as an alternative, the device 1 or the electronic identity card 4 or the chip 12 of the mobile phone 10, generate a public key PbK_{SIM} and a corresponding private key PrK_{SIM}. The public key PbK_{SIM} and the corresponding private key PrK_{SIM} are in any case stored on the SIM 6. Obviously, the private key PrK_{SIM} is stored on the SIM 6, according to known techniques, thereby guaranteeing the inaccessibility from outside.

At step 703 the device 1 requests and obtains from the SIM 6 a unique string ID_{SIM} that is generally the serial number of the SIM, univocally assigned by the manufacturer of the SIM itself. In this same step, the device 1 requests and obtains the digital certificate CD_{CIE} from the electronic identity card 4.

At step 705 the device 1 concatenates the digital certificate CD_{CIE} with the unique string ID_{SIM}, thereby obtaining a string CD_{CIESIM} = CD_{CIE#IDSIM}.

At step 707 the device 1 or the electronic identity card 4 performs a cryptographic operation by means of a "hashing" algorithm of the string CD_{CIESIM}, thereby obtaining the string HCD_{CIESIM}=H(CD_{CIESIM}).

At step 709 the SIM 6 performs an asymmetric cryptographic operation of the string HCD_{CIESIM} with the private key PrK_{SIM}, thereby obtaining the string HCD'_{CIESIM} = HCD_{CIESIM} ⊗ PrK_{SIM}.

At step 711 the electronic identity card 4 performs an asymmetric cryptographic operation of the string HCD'_{CIESIM} with the private key PrK_{CIE}, thereby obtaining the string HCD"_{CIESIM} = HCD'_{CIESIM} ⊗ PrK_{CIE}.

Finally, at step 713 the digital certificate CD_{CIE} of the electronic identity card 4 and the string HCD"_{CIESIM} are stored on the SIM 6 (step 713). In this way, the electronic identity card 4 is univocally bound to the SIM 6.

Then the SIM card 6 can be taken out from the device 1 and be inserted into a mobile phone 10 for being used in the authentication procedure with a service provider, for instance a bank, the public administration or a shop.

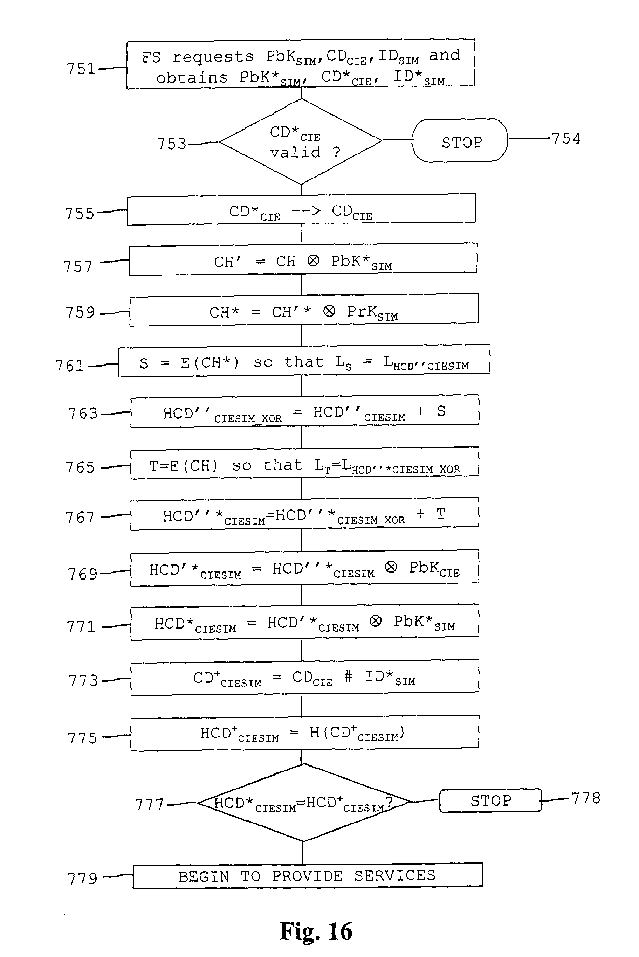

With reference to the Figures 2b and 16, it will be now described the authentication procedure according to this embodiment of the invention.

By making a phone call to a service provider, the mobile phone 10 containing the SIM 6 is put into communication with a computer FS of a service provider.

During the use stage of said SIM 6, at step 751 the computer FS of the service provider requests to the SIM 6 either the public key PbK_{SIM} or the digital certificate CD_{CIE} and the identification number ID_{SIM} of the SIM 6. In reply, it obtains respectively PbK*_{SIM}, CD*_{CIE} e ID*_{SIM}. It should be noted that it could happen that PbK_{SIM}, CD_{CIE} and ID_{SIM} do not match respectively with PbK*_{SIM}, CD*_{CIE} e ID*_{SIM} due to transmission errors or deliberate alterations.

At step 753 the computer FS, in possession of the public key PbK_{CA} of the certification authority CA identified through the digital certificate CD*_{CIE} of the electronic identity card 4 and guaranteeing the certificate itself, verifies the validity of the signature of the certificate body by the CA itself.

In addition, the computer FS verifies that the digital certificate CD*_{CIE} has not expired. Finally, the computer FS interrogates a remote computer CRL, disposing of the list of the certificates revoked by the certification authority CA (in case, the computer CRL can also coincide with the computer of the certification authority CA).

Since the computer CRL guarantees the validity of the certificate, it will verify that this latter has not been revoked.

Only in case of positive outcome of the three checks, the computer FS will proceed with step 755; otherwise (step 754) the service provider will stop the user authentication procedure.

At step 755 the computer FS considers the certificate CD*_{CIE} as authentic (and therefore matching with CD_{CIE}) and valid.

At step 757 the computer FS generates a random number CH, creates from said number CH, by means of an asymmetric cryptographic operation with the public key PbK*_{SIM}, a string CH' = CH ⊗ PbK*_{SIM} and sends said string CH' to the SIM 6 of the mobile phone 10 that receives it as CH'*.

At step 759 the SIM 6 deciphers the string CH'* with the private key PrK_{SIM}, thereby obtaining the number CH* = CH'* ⊗ PrK_{SIM}.

At step 761 the SIM 6 expands, by means of an expansion algorithm E, said number CH*, thereby obtaining a string S of length L_{S}, equal to the length L_{HCD"CIESIM} of the string HCD"_{CIESIM} (S=E(CH*), so that L_{S} = L_{HCD"CIESIM}).

At step 763 a string HCD"_{CIESIM_XOR} = HCD"_{CIESIM} ⊕ S obtained performing a logic operation XOR between the string HCD"_{CIESIM} and the string S is generated by the SIM 6. The string HCD"_{CIESIM_XOR} is successively sent to the computer FS that receives it as HCD"*_{CIESIM_XOR}.

At step 765 the computer FS expands by means of an expansion algorithm E the random number CH, thereby obtaining a string T of length L_{T} equal to the length L_{HCD"*CIESIM_XOR} of the string HCD"*_{CIESIM_XOR} (T=E(CH), so that L_{T} = L_{HCD"*CIESIM_XOR}).

At step 767 the computer FS obtains the string HCD"*_{CIESIM} = HCD"*_{CIESIM_XOR} ⊕ T by performing the logic operation XOR between the string HCD"*_{CIESIM_XOR} and the string T.

At step 769 the computer FS deciphers the string HCD"*_{CIESIM} with the public key PbK_{CIE}, present on the digital certificate CD_{CIE}, thereby obtaining HCD'*_{CIESIM} = HCD"*_{CIESIM} ⊗ PbK_{CIE}.

At step 771 the computer FS deciphers the string HCD'*_{CIESIM} with the public key PbK*_{SIM}, thereby obtaining the string HCD*_{CIESIM} = HCD'*_{CIESIM} ⊗ PbK*_{SIM}.

At step 773 the computer FS concatenates the digital certificate CD_{CIE} with the string ID*_{SIM} , thereby obtaining the string CD⁺_{CIESIM} = CD_{CIE} # ID*_{SIM}.

At step 775 it obtains the string HCD⁺_{CIESIM} = H(CD⁺_{CIESIM}) by means of an "hashing" algorithm on the string CD⁺_{CIESIM}.

At step 777 the computer FS compares the string HCD*_{CIESIM} with the string HCD⁺_{CIESIM} (HCD*_{CIESIM} = HCD⁺_{CIESIM} ?). In case the string HCD*_{CIESIM} does not match with the string HCD⁺_{CIESIM}, the service provider will stop the user authentication procedure (step 778).

Only in case of positive outcome (step 779), the user authentication has turned out well and the service provider will begin offering services to the user, since the service provider has unequivocally identified the owner of the SIM 6 contained in the mobile phone 10.

Although in all the authentication methods described the digital certificate of the electronic identity card is used as a starting point, nonetheless it is also possible to use whatever string, provided that it contains the public key of the electronic identity card.

Although in all the authentication methods described the electronic identity card is univocally bound to a smart card to be used in a mobile phone, it is also possible to bind univocally the electronic identity card to whatever device for storing data, like for instance a magnetic or optical disk, a microprocessor and so on.

As a consequence, it appears clear that the described methods are susceptible of being applied to whatever communication apparatus, also different from the mobile phone, provided that it is able to read data contained in the device 6 for storing data and to communicate them to the exterior of the apparatus itself either via radio waves or through electric connections.

It is clear that what has been described is given as a not limiting example and that changes and modifications are possible without departing from the field of protection of the invention.

## Claims

1. User authentication method performed by a computer (FS) by means of a data storing device comprising the steps of:
- arranging a smart card (4) wherein a first private key (PrK_{CIE}) and a digital certificate (CD_{CIE}) containing the first public key (PbK_{CIE}) corresponding to said first private key (PrK_{CIE}) are stored;
- arranging a device (6) for storing data;
- obtaining an identifying string (ID_{SIM}) of said device (6) for storing data;
- arranging a first coding method using said first private key (PrK_{CIE}) and a corresponding first decoding method using said first public key (PbK_{CIE}) corresponding to said first private key (PrK_{CIE});
- arranging a second coding method using said identifying string (ID_{SIM});
- applying in succession said second coding method and said first coding method to a first string (CD_{CIE}) containing said first public key (PbK_{CIE}), in order to obtain a second string (HCD'_{CIESIM};HCD"_{CIESIM});
- storing said first string (CD_{CIE}), said second string (HCD'_{CIESIM};HCD"_{CIESIM}) and said identifying string (ID_{SIM}), in a memory (8;14;11) accessible to said computer (FS);
- putting said device (6) for storing data into communication with said computer (FS);
- applying said second coding method to said first string (CD_{CIE}) in order to obtain a third string (HCD*_{CIESIM});
- applying said first decoding method to said second string (HCD'_{CIESIM};HCD"_{CIESIM}), in order to obtain a fourth string (HCD_{CIESIM};HCD⁺_{CIESIM});
- comparing said third string (HCD*_{CIESIM}) with said fourth string (HCD_{CIESIM};HCD⁺_{CIESIM}) and, in case of identity, informing the computer (FS) that said device (6) for storing data has been necessarily obtained from said smart card (4).

2. Authentication method according to claim 1, wherein:
- said second coding method consists in a first operation of concatenation of said first string (CD_{CIE}) with said identifying string (ID_{SIM});
- said first coding method consists in a second asymmetric cryptographic operation of the result of said first operation (HCD_{CIESIM}) with said first private key (PrK_{CIE}); and
- said first decoding method consists in a third asymmetric cryptographic operation of said second string (HCD'_{CIESIM}) with said first public key (PbK_{CIE}).

3. Authentication method according to claim 2, wherein an "hashing" algorithm is applied to the result of said first operation (CD_{CIESIM},CD*_{CIESIM}) and to the result of said third operation (CD_{CIESIM}).

4. Authentication method according to claim 2 or 3, wherein said second operation is performed by said smart card (4) and said third operation is performed by said computer (FS).

5. Authentication method according to claim 1, wherein said first coding method and said first decoding method provide for the use of a second private key (PrK_{SIM}) and of a second public key (PbK_{SIM}).

6. Authentication method according to claim 5, wherein :
- said second coding method consists in a first operation of concatenation of said first string (CD_{CIE}) with said first identifying string (ID_{SIM});
- said first coding method consists in the steps of:
- performing a second asymmetric cryptographic operation of the result of said first operation (HCD_{CIESIM}) with said first private key (PrK_{CIE}), in order to obtain a fifth string (HCD'_{CIESIM});
- performing a third asymmetric cryptographic operation of said fifth string (HCD'_{CIESIM}) with said second public key (PbK_{SIM}), in order to obtain a sixth string (H^{P}CD"_{CIESIM});
- performing a fourth asymmetric cryptographic operation of said sixth string (H^{P}CD"_{CIESIM}) with said second private key (PrK_{SIM}), in order to obtain a seventh string (HCD'_{CIESIM});
- performing a fifth asymmetric cryptographic operation of said seventh string (HCD'_{CIESIM}) with said second private key (PrK_{SIM}), in order to obtain said second string (HCD"_{CIESIM});
- and said first decoding method consists in the steps of:
- performing a sixth asymmetric cryptographic operation of said second string (HCD"_{CIESIM}) with said second public key (PbK_{SIM}), in order to obtain a ninth string (HCD'_{CIESIM});
- performing a seventh asymmetric cryptography operation of said ninth string (HCD'_{CIESIM}) with said first public key (PbK_{CIE}), in order to obtain said fourth string (HCD_{CIESIM}).

7. Authentication method according to claim 6, wherein said second operation is performed by said smart card (4), said fourth and fifth operations are performed by a microprocessor (12) of said apparatus (10), and said sixth and seventh operations are performed by said computer (FS).

8. Authentication method according to claim 5, wherein:
- said second coding method consists in a first operation of concatenation of said first string (CD_{CIE}) with said identifying string (ID_{SIM});
- said first coding method consists in the steps of:
- performing a second asymmetric cryptographic operation of the result of said first operation (HCD_{CIESIM}) with said first private key (PrK_{CIE}), in order to obtain a fifth string (HCD'_{CIESIM});
- performing a third asymmetric cryptographic operation of said fifth string (HCD'_{CIESIM}) with said second private key (PrK_{SIM}), in order to obtain said second string (HCD"_{CIESIM});
- and said first decoding method consists in the steps of:
- performing a fourth asymmetric cryptographic operation of said second string (HCD"_{CIESIM}) with said second public key (PbK_{SIM}), in order to obtain a seventh string (HCD'_{CIESIM});
- performing a fifth asymmetric cryptographic operation of said seventh string (HCD'_{CIESIM}) with said first public key (PbK_{CIE}), in order to obtain said fourth string (HCD_{CIESIM}).

9. Authentication method according to claim 8, wherein said second operation is performed by said smart card (4), said third operation is performed by a second computer (TP) and said fourth and fifth operations are performed by said computer (FS).

10. Authentication method according to any of the claims 6 to 9, wherein an "hashing" algorithm is applied to the result of said first operation (CD_{CIESIM}).

11. User authentication method performed by a computer (FS) by means of a device for storing data comprising the steps of:
- arranging a smart card (4) wherein a first private key (PrK_{CIE}) and a digital certificate (CD_{CIE}) containing the first public key (PbK_{CIE}) corresponding to said first private key (PrK_{CIE}) are stored;
- arranging a device (6) for storing data;
- obtaining an identifying string (ID_{SIM}; PrK_{SIM}, PbK_{SIM}) of said device (6) for storing data;
- arranging two coding methods and two decoding methods, said first coding method providing for the use of said first private key (PrK_{CIE}) and said first decoding method providing for the use of said public key (PbK_{CIE}) corresponding to said private key (PrK_{CIE}), said second coding method and said second decoding method providing for the use of said identifying string (ID_{SIM}; PrK_{SIM}, PbK_{SIM});
- applying in succession said first/second coding method and said second/first coding method to a first string (CD_{CIE}) containing said public key (PbK_{CIE}), in order to obtain a second string (HCD"_{CIE};HCD'_{CIE_XOR});
- storing said first string (CD_{CIE}), said second string (HCD"_{CIE};HCD'_{CIE_XOR}) and said identifying string (ID_{SIM}; PrK_{SIM}, PbK_{SIM}), in a memory (13) accessible to said computer (FS);
- putting said device (6) for storing data into communication with said computer (FS);
- applying to said second string (HCD"_{CIE};HCD'_{CIE_XOR}) said second/first decoding method, in order to obtain a third string (HCD'_{CIE});
- applying to said third string (HCD'_{CIE};HCD'_{CIE}) said first/second decoding method, in order to obtain a fourth string (HCD*_{CIE});
- comparing said first string (HCD_{CIE}) with said fourth string (HCD*_{CIE}) and, in case of identity, informing the computer (FS) that said device (6) for storing data has been necessarily obtained by said smart card (4).

12. Authentication method according to claim 11, wherein:
- said second coding method consists in a first asymmetric cryptographic operation of said first string (CD_{CIE}) with said second public key (PbK_{SIM});
- said first coding method consists in a second asymmetric cryptographic operation of the result of said first operation (HCD'_{CIE}) with said first private key (PrK_{CIE});
- said first decoding method consists in the steps of:
- generating a first random number (CH);
- creating from the first random number (CH) a fifth string (CH') by means of an asymmetric cryptographic operation with said second public key (PbK_{SIM});
- performing a third asymmetric cryptography operation of said fifth string (CH') with said second private key (PrK_{SIM}), thereby obtaining a second random number (CH*);
- generating, by means of an "hashing" algorithm on said second random number (CH*), a sixth string (S) that is concatenated with itself more times until its length (L_{S}) is equal to the length (L_{HCD"CIE}) of said second string (HCD"_{CIE});
- generating a seventh string (HCD"_{CIE_XOR}) obtained by performing a first logic operation XOR between said second string (HCD"_{CIE}) and said sixth string (S);
- generating, by means of an "hashing" algorithm on said second random number (CH), an eight string (T) that is concatenated with itself more times until its length (L_{T}) is equal to the length (L_{HCD"CIE_XOR}) of said seventh string (HCD"_{CIE_XOR});
- performing a second logic operation XOR between said seventh string (HCD"_{CIE_XOR}) and said eight string (T), thereby obtaining a string that corresponds to said third string (HCD'_{CIE});
- performing a fourth asymmetric cryptographic operation on said third string (HCD'_{CIE}) with said first private key (PbK_{CIE});
- and said second coding method consists in the steps of:
- performing a fifth asymmetric cryptographic operation on the result of said fourth operation (HCD'_{CIE}) with said second public key (PbK_{SIM}), thereby obtaining said fourth string (HCD*_{CIE}).

13. Authentication method according to claim 12, wherein said storing device (6) is provided with a microprocessor.

14. Authentication method according to claim 13, wherein said second operation is performed by said smart card (4), said third operation and said first logic operation are performed by said storing device (6) or by the mobile phone (10), and said fourth and fifth operations together with said second logic operation are performed by said computer (FS).

15. Authentication method according to claim 11, wherein:
- said first coding method consists in performing a first asymmetric cryptographic operation of said first string with said first private key, in order to obtain a fifth string (HCD'_{CIE});
- said second coding method consists in the steps of:
- concatenating said identifying string (ID_{SIM}) with itself until a sixth string (S) of length (L_{S}) equal to the length (L_{HCD'CIE}) of said fifth string (HCD'_{CIE}) is obtained;
- performing a first logic operation XOR between said fifth string (HCD'_{CIE}) and said sixth string (S) for obtaining a string that corresponds to said second string (HCD'_{CIE_XOR});
- said second decoding method consisting in the steps of:
- concatenating said identifying string (ID_{SIM}) with itself until a seventh string (T) of length (L_{T}) equal to the length of said second string (L_{HCD'CIE_XOR}) is obtained;
- performing a second logic operation XOR between said second string (HCD'_{CIE_XOR}) and said seventh string (T), in order to obtain an eight string (HCD'_{CIE});
- said first decoding method consists in performing a second asymmetric cryptographic operation of said eight string (HCD'_{CIE}) with said first public key (PbK_{CIE}), in order to obtain a string that corresponds to said fourth string (HCD*_{CIE}).

16. Authentication method according to claim 15, wherein said first operation is performed by said smart card (4) and said second operation together with said two logic operations are performed by said computer (FS).

17. Authentication method according to any of the claims 11 to 16, wherein said first string is a string to which an "hashing" algorithm has been applied.

18. Authentication method according to any of the claims from 1 to 4 and from 11 to 13, wherein said memory accessible to said computer (FS) is a memory (8) contained in said device (6) for storing data.

19. Authentication method according to any of the claims 1,5,6,7,10 wherein said memory accessible to said computer (FS) is a memory (14) contained in a microprocessor (12) of said communication apparatus (10).

20. Authentication method according to any of the claims 1,5,8,9,10 wherein said memory accessible to said computer (FS) is a memory (11) contained in a second computer (TP).

21. Authentication method according to any of the claims 11,14,15,16,17 wherein said memory accessible to said computer (FS) is a memory (13) contained in said computer itself (FS).

22. Authentication method according to any of the preceding claims, wherein said first string is the digital certificate (CD_{CIE}) stored in said smart card (4).

23. Authentication method according to claim 22, wherein at the end of said authentication method, it is provided to verify the validity of said digital certificate (CD_{CIE}) by a remote computer (CRL) disposing of a list of the certificates revoked by the certification authority (CA), said authority being identified through said digital certificate (CD_{CIE}), and only if said digital certificate (CD_{CIE}) is valid, the computer (FS) is informed that it is possible to provide for some services.

24. Authentication method according to claim 23, wherein said remote computer (CRL) is the computer of the certification authority (CA).

25. Authentication method according to any of the preceding claims, wherein said device (6) for storing data is intended to be used in a communication apparatus (10).

26. Authentication method according to any of the preceding claims, wherein said communication apparatus (10) is a mobile phone.

27. Authentication method according to any of the preceding claims, wherein said device (6) for storing data is a second smart card.

28. Device for obtaining a device (6) for storing data to be used in the authentication method as claimed in the claims from 1 to 27 starting from a smart card (4) wherein a first string (CD_{CIE}) containing a public key (PbK_{CIE}) and a private key (PrK_{CIE}) corresponding to said public key are stored, said smart card (4) being usable for authenticating a user by means of a computer (FS), said device (1) comprising reading means of said smart card (4), reading/writing means of said device (6) for storing data and data processing means, **characterised in that** said data processing means generate a second string (HCD'_{CIESIM};HCD"_{CIE};HCD"_{CIESIM}; HCD'_{CIE_XOR}) associated to said first string (CD_{CIE}), and store said second string (HCD'_{CIESIM};HCD"_{CIE};HCD"_{CIESIM};HCD'_{CIE_XOR}), together with an identifying string (ID_{SIM}; PbK_{SIM}, PrK_{SIM}) of said device (6) for storing data, in a memory accessible (8;11;13;14) to said computer (FS).

29. Device according to claim 28, **characterised in that**, for obtaining said second string (HCD'_{CIESIM};HCD"_{CIE};HCD"_{CIESIM}; HCD'_{CIE_XOR}) from said first string (CD_{CIE}) a first coding method using said first private key (PrK_{CIE}) and a second coding method using said identifying string (ID_{SIM}; PbK_{SIM}, PrK_{SIM}) or vice versa are applied in succession.

30. Device according to one of the claims 28 or 29, **characterised in that** said memory accessible to said computer (FS) is a memory (8) contained in said device (6) for storing data.

31. Device according to one of the claims 28 or 29, **characterised in that** said memory accessible to said computer (FS) is a memory (13) contained in said computer (FS).

32. Device according to one of the claims 28 or 29, **characterised in that** said memory accessible to said computer (FS) is a memory (11) contained in a second computer (TP).

33. Device according to one of the claims 28 or 29, **characterised in that** said memory accessible to said computer (FS) is a memory (14) contained in a microprocessor (12).

34. Device according to one of the claims 28 to 33, **characterised in that** said first string is said digital certificate (CD_{CIE}).

35. Device for storing data to be used in the authentication method as claimed in the claims from 1 to 27, wherein are stored a first string (CD_{CIE}) containing a public key (PbK_{CIE}), an identifying string (ID_{SIM}; PbK_{SIM}, PrK_{SIM}) of said smart card and a second string (HCD'_{CIESIM};HCD"_{CIE};HCD"_{CIESIM};HCD'_{CIE_XOR}) obtained by applying in succession to said first string (CD_{CIE}) two coding methods, wherein one of said two coding methods uses the private key (PrK_{CIE}) associated to said public key (PbK_{CIE}), and the other of said two coding methods uses said identifying string (ID_{SIM}; PbK_{SIM}, PrK_{SIM}).

36. Device for storing data according to claim 35, **characterised in that** said device is a smart card (6).
